# EUROPEAN PATENT APPLICATION

(11) **EP 3 751 139 A1**
(43) Date of publication of application: **16.12.2020**
(21) Application number: 18905052.9
(22) Date of filing: 26.12.2018
(51) Int. Cl.: F04B 27/18, F16K 31/06

(54) **CONTROL VALVE FOR VARIABLE DISPLACEMENT COMPRESSOR**

(30) Priority: 08.02.2018 JP 2018021231
(71) Applicant: Fujikoki Corporation, Tokyo 158-0082 (JP)
(72) Inventor: TANO, Shintaro, Tokyo 158-0082 (JP); SAKAMOTO, Takashi, Tokyo 158-0082 (JP); SHIMADA, Kenki, Tokyo 158-0082 (JP); ITOH, Masaharu, Tokyo 158-0082 (JP); KUME, Yoshiyuki, Tokyo 158-0082 (JP)
(74) Representative: Ter Meer Steinmeister & Partner
(86) International application number: PCT/JP2018/047971
(87) International publication number: WO 2019/155780

(57) **Abstract**

Provided is a variable-capacity compressor control valve that can efficiently cancel the influence of the refrigerant pressure acting on a main valve element and avoid increase in complexity of the structure and size of the control valve. A pressure equalizing passage 15 is provided which is adapted to guide a suction pressure Ps acting on the upper end of a main valve element 10 to a Ps introduction chamber 48B provided at the lower end of the main valve element 10 so that the suction pressure Ps acts on the lower end of the main valve element. When an electromagnetic actuator 30 (or a solenoid portion 30A thereof) is not supplied with current (i.e., when a valve orifice 22 is fully open), the introduction of a pressure Pc in a crank chamber from Pc inlet/outlet ports 26 into the Ps introduction chamber 48B is stopped, and the suction pressure Ps is introduced into the Ps introduction chamber 48B via the pressure equalizing passage 15 so that the suction pressure Ps acts on the upper and lower ends of the main valve element 10.

## Description

### Technical Field

The present invention relates to a variable-capacity compressor control valve for use in an automotive air conditioner, for example. In particular, the present invention relates to a variable-capacity compressor control valve in which, when current is not supplied, the influence of the refrigerant pressure acting on a valve element can be cancelled.

### Background Art

Usually, a control valve for a variable-capacity compressor used for an automotive air conditioner, for example, is adapted to receive a discharge pressure Pd from a discharge chamber of the compressor and control a pressure Pc in a crank chamber by controlling the discharge pressure Pd in accordance with a suction pressure Ps of the compressor. Typically, such a control valve has, as seen in Patent Literature 1 below, for example, a valve body that includes a valve chamber with a valve orifice, a Ps inlet/outlet port communicating with the suction chamber of the compressor, a Pd introduction port arranged upstream of the valve orifice and communicating with the discharge chamber of the compressor, and a Pc inlet/outlet port arranged downstream of the valve orifice and communicating with the crank chamber of the compressor; a main valve element (i.e., a valve stem) for opening or closing the valve orifice; an electromagnetic actuator including a plunger, the electromagnetic actuator being adapted to move the main valve element in the direction to open or close the valve orifice; a pressure-sensitive chamber adapted to receive the suction pressure Ps from the compressor via the Ps inlet/outlet port; and a pressure-sensitive reaction member, such as a bellows device, adapted to urge the main valve element in the direction to open or close the valve orifice in accordance with the pressure in the pressure-sensitive chamber.

A variable-capacity compressor control valve described in Patent Literature 2 below includes, in addition to the aforementioned configuration, an in-valve release passage for releasing the pressure Pc in the crank chamber to the suction chamber of the compressor via the Ps inlet/outlet port, and a sub valve element (i.e., a ball valve element) for opening or closing the in-valve release passage. When the plunger is continuously moved upward from the lowest position due to the attraction force of the electromagnetic actuator, the sub valve element moves upward together with the plunger while closing the in-valve release passage, and the main valve element is also moved upward so as to follow the sub valve element. Then, after the valve orifice is closed by the main valve element, if the plunger is further moved upward, the sub valve element is caused to open the in-valve release passage.

### Citation List

### Patent Literature

Patent Literature 1: JP 5553514 B
Patent Literature 2: JP 4550651 B

### Summary of Invention

### Technical Problem

By the way, in the variable-capacity compressor control valves of this type, if there is a difference between the force in a direction to open the valve and the force in a direction to close the valve due to the refrigerant pressure acting on the main valve element (i.e., the valve stem), control of the valve may be adversely affected (e.g., control accuracy may be reduced) (see Patent Literature 2, for example). Specifically, since the pressure Pc in the crank chamber is higher than the suction pressure Ps, the pressure difference (Pc-Ps) causes the main valve element and the plunger to be pressed upward in the valve-closing direction. If the pressure difference (Pc-Ps) increases, control of the valve may be adversely affected such that the main valve element tends to be in the closed position, and the in-valve release passage tends to be open, for example.

Thus, for example in the conventional variable-capacity compressor control valve disclosed in Patent Literature 1, the lower end of the main valve element faces a Ps introduction chamber that is adapted to receive the suction pressure Ps so that the suction pressure Ps acts on the lower end of the main valve element. Further, the valve body includes a suction pressure passage that is adapted to receive the suction pressure Ps of the compressor so that the suction pressure Ps is guided to the pressure-sensitive reaction member and the suction pressure Ps acts on the upper end of the main valve element. Thus, it is less likely that the refrigerant pressure acting on the main valve element adversely affects the control of the valve.

Meanwhile, in the conventional variable-capacity compressor control valve disclosed in Patent Literature 1, although the main valve element may easily be held in the fully open position (that is, compressor-off mode performance increases) when the valve orifice is fully open (i.e., when the capacity (discharge amount) control is off) because the suction pressure passage makes the force in the valve-opening direction and the force in the valve-closing direction due to the refrigerant pressure acting on the main valve element always equal to one another, the structure of the control valve may become complicated.

In addition, in the conventional variable-capacity compressor control valve disclosed in Patent Literature 1, the size of the valve body may be increased since the valve body is provided with the Ps introduction chamber that is adapted to receive the suction pressure Ps of the compressor and also provided with the suction pressure passage that is adapted to guide the suction pressure Ps of the compressor to the pressure-sensitive reaction member.

The present invention has been made in view of the foregoing, and it is an object of the present invention to provide a variable-capacity compressor control valve that can efficiently cancel the influence of the refrigerant pressure acting on the main valve element and can avoid increase in complexity of the structure and size of the control valve.

### Solution to Problem

To achieve the aforementioned objects, a variable-capacity compressor control valve according to the present invention basically includes: a main valve element including a main valve element portion; a valve body including a valve chamber with a valve orifice, the valve orifice being adapted to be in contact with or away from the main valve element portion, a Ps inlet/outlet port communicating with a suction chamber of a compressor, a Pd introduction port arranged upstream of the valve orifice and communicating with a discharge chamber of the compressor, and a Pc inlet/outlet port arranged downstream of the valve orifice and communicating with a crank chamber of the compressor; an electromagnetic actuator including a plunger, the electromagnetic actuator being adapted to move the main valve element in a direction to open or close the valve orifice; a pressure-sensitive chamber adapted to receive a suction pressure Ps from the compressor via the Ps inlet/outlet port; and a pressure-sensitive reaction member adapted to urge the main valve element in the direction to open or close the valve orifice in accordance with a pressure in the pressure-sensitive chamber, in which the Ps inlet/outlet port or the pressure-sensitive chamber is provided at one end of the main valve element so that the suction pressure Ps acts on the one end of the main valve element, the Pc inlet/outlet port is provided at another end of the main valve element so that a pressure Pc in the crank chamber from the compressor acts on the other end of the main valve element, a pressure equalizing passage is provided, the pressure equalizing passage being adapted to guide the suction pressure Ps to a Ps introduction chamber provided at the other end of the main valve element, so that the suction pressure Ps acts on the other end of the main valve element, and when the valve orifice is fully open, introduction of the pressure Pc in the crank chamber from the Pc inlet/outlet port into the Ps introduction chamber is stopped, and the suction pressure Ps is introduced into the Ps introduction chamber via the pressure equalizing passage so that the suction pressure Ps acts on the one end and the other end of the main valve element.

In a more specific and preferable aspect, the Ps inlet/outlet port or the pressure-sensitive chamber is provided at one end of the main valve element so that the suction pressure Ps acts on the one end of the main valve element, the Pc inlet/outlet port is provided at another end of the main valve element, and a pressure equalizing passage is provided, the pressure equalizing passage being adapted to guide the suction pressure Ps to a Ps introduction chamber provided at the other end of the main valve element, so that the suction pressure Ps acts on the other end of the main valve element, when the valve orifice is fully open, introduction of a pressure Pc in the crank chamber from the Pc inlet/outlet port into the Ps introduction chamber is stopped, and the suction pressure Ps is introduced into the Ps introduction chamber via the pressure equalizing passage so that the suction pressure Ps acts on the one end and the other end of the main valve element, and when a valve opening degree of the valve orifice is controlled or when the valve orifice is closed, the pressure Pc in the crank chamber is introduced into the Ps introduction chamber via the Pc inlet/outlet port so that the pressure Pc in the crank chamber acts on the other end of the main valve element and the suction pressure Ps acts on the one end of the main valve element.

In a preferable aspect, introduction of the pressure Pc in the crank chamber from the Pc inlet/outlet port into the Ps introduction chamber is stopped by the main valve element.

In further preferable aspect, introduction of the pressure Pc in the crank chamber from the Pc inlet/outlet port into the Ps introduction chamber is stopped when the main valve element abuts a stopper portion for defining a lowest position of the main valve element.

In further preferable aspect, the stopper portion is provided on an end of a cylindrical portion, the cylindrical portion being provided in the valve body in a protruding manner so as to form the Ps introduction chamber.

In further preferable aspect, the valve body is provided with a guide hole through which an intermediate fit-inserted portion of the main valve element is slidably fitted and inserted, and a cross-sectional area of the intermediate fit-inserted portion of the main valve element, a cross-sectional area of a portion of the main valve element abutting the stopper portion, and an opening area of the valve orifice are equal to one another so that a force in a valve-opening direction and a force in a valve-closing direction due to a refrigerant pressure acting on the main valve element are equal to one another when the valve orifice is fully open.

In another preferable aspect, an urging member adapted to urge the main valve element in the valve-closing direction is mounted in the Ps introduction chamber.

In another preferable aspect, the Pc inlet/outlet port is provided on an outer periphery portion or a bottom of the valve body.

In further preferable aspect, the Pc inlet/outlet port is provided in a lid-like member hermetically and securely attached to the bottom of the valve body.

In still another preferable aspect, the pressure equalizing passage is adapted to include an inner portion of the main valve element.

In still another preferable aspect, the variable-capacity compressor control valve includes an in-valve release passage provided in the main valve element or the valve body, the in-valve release passage being adapted to release the pressure Pc in the crank chamber to the suction chamber of the compressor via the Ps inlet/outlet port; and a sub valve element adapted to open or close the in-valve release passage.

In addition, the variable-capacity compressor control valve according to the present invention basically includes: a main valve element including a main valve element portion; a valve body including a valve chamber with a valve orifice, the valve orifice being adapted to be in contact with or away from the main valve element portion, a Ps inlet/outlet port communicating with a suction chamber of a compressor, a Pd introduction port arranged upstream of the valve orifice and communicating with a discharge chamber of the compressor, and a Pc inlet/outlet port arranged downstream of the valve orifice and communicating with a crank chamber of the compressor; an electromagnetic actuator including a plunger, the electromagnetic actuator being adapted to move the main valve element in a direction to open or close the valve orifice; a pressure-sensitive chamber adapted to receive a suction pressure Ps from the compressor via the Ps inlet/outlet port; and a pressure-sensitive reaction member adapted to urge the main valve element in the direction to open or close the valve orifice in accordance with a pressure in the pressure-sensitive chamber, in which the Ps inlet/outlet port or the pressure-sensitive chamber is provided at one end of the main valve element so that the suction pressure Ps acts on the one end of the main valve element, and the Pc inlet/outlet port is provided at another end of the main valve element so that a pressure Pc in the crank chamber from the compressor acts on the other end of the main valve element, and a pressure acting on the one end of the main valve element or a pressure acting on the other end of the main valve element is switched between the suction pressure Ps and the pressure Pc in the crank chamber when the valve orifice is fully open and either when a valve opening degree of the valve orifice is controlled or when the valve orifice is closed.

In a preferable aspect, when the valve orifice is fully open, a pressure acting on the one end of the main valve element is equal to a pressure acting on the other end of the main valve element, and when a valve opening degree of the valve orifice is controlled or when the valve orifice is closed, a pressure acting on the one end of the main valve element or a pressure acting on the other end of the main valve element is switched, and the main valve element is adapted to be urged in a valve-closing direction in response to a pressure difference between the one end and the other end of the main valve element.

In further preferable aspect, when the valve orifice is fully open, introduction of the pressure Pc in the crank chamber from the Pc inlet/outlet port into a Ps introduction chamber provided at the other end of the main valve element is stopped so that the suction pressure Ps acts on the one end and the other end of the main valve element, and when a valve opening degree of the valve orifice is controlled or when the valve orifice is closed, the pressure Pc in the crank chamber is introduced into the Ps introduction chamber via the Pc inlet/outlet port so that the pressure Pc in the crank chamber acts on the other end of the main valve element and the suction pressure Ps acts on the one end of the main valve element, and the main valve element is adapted to be urged in a valve-closing direction in response to a pressure difference between the one end and the other end of the main valve element.

In further preferable aspect, a pressure equalizing passage is provided, the pressure equalizing passage being adapted to guide the suction pressure Ps to the Ps introduction chamber so that the suction pressure Ps acts on the other end of the main valve element.

### Advantageous Effects of Invention

According to the present invention, a pressure equalizing passage is provided which is adapted to guide a suction pressure Ps acting on one end of the main valve element to a Ps introduction chamber provided at the other end of the main valve element so that the suction pressure Ps acts on the other end of the main valve element. When the valve orifice is fully open, the introduction of the pressure Pc in the crank chamber from the Pc inlet/outlet port into the Ps introduction chamber is stopped, and the suction pressure Ps is introduced into the Ps introduction chamber via the pressure equalizing passage so that the suction pressure Ps acts on one end and the other end of the main valve element.

In other words, the pressure acting on one end of the main valve element or the pressure acting on the other end of the main valve element is switched between the suction pressure Ps and the pressure Pc in the crank chamber when the valve orifice is fully open and either when the valve opening degree of the valve orifice is controlled or when the valve orifice is closed. More specifically, when the valve orifice is fully open, the pressure acting on one end of the main valve element is equal to the pressure acting on the other end of the main valve element (i.e., the suction pressure Ps) through the pressure equalizing passage. Meanwhile, when the valve opening degree of the valve orifice is controlled or when the valve orifice is closed, the pressure acting on one end of the main valve element or the pressure acting on the other end of the main valve element is switched, and the main valve element is urged in the valve-closing direction in response to a pressure difference between one end and the other end of the main valve element.

Therefore, as compared to the conventional control valve in which the force in the valve-opening direction and the force in the valve-closing direction due to the refrigerant pressure acting on the main valve element are always equal to one another, for example, it is possible to efficiently cancel the influence of the refrigerant pressure acting on the main valve element.

More specifically, with the pressure equalizing passage having the aforementioned configuration, if the cross-sectional area (i.e., the opening area or the pressure receiving area of the guide hole) of the intermediate fit-inserted portion of the main valve element, the cross-sectional area (i.e., the pressure receiving area of the Ps introduction chamber) of the portion of the main valve element abutting the stopper portion, and the opening area (i.e., the pressure receiving area or the effective opening area) of the valve orifice are equal to one another, the force in the valve-opening direction and the force in the valve-closing direction due to the refrigerant pressure acting on the main valve element may be brought into balance (cancel out each other). Thus, it is certainly less likely that the refrigerant pressure acting on the main valve element adversely affects the control of the valve.

In addition, since the pressure equalizing passage is adapted to include an inner portion of the main valve element, as compared to the conventional control valve in which the valve body is provided with the suction pressure passage and the like, for example, it is possible to cancel the influence of the refrigerant pressure acting on the main valve element without increasing the size of the valve body.

### Brief Description of Drawings

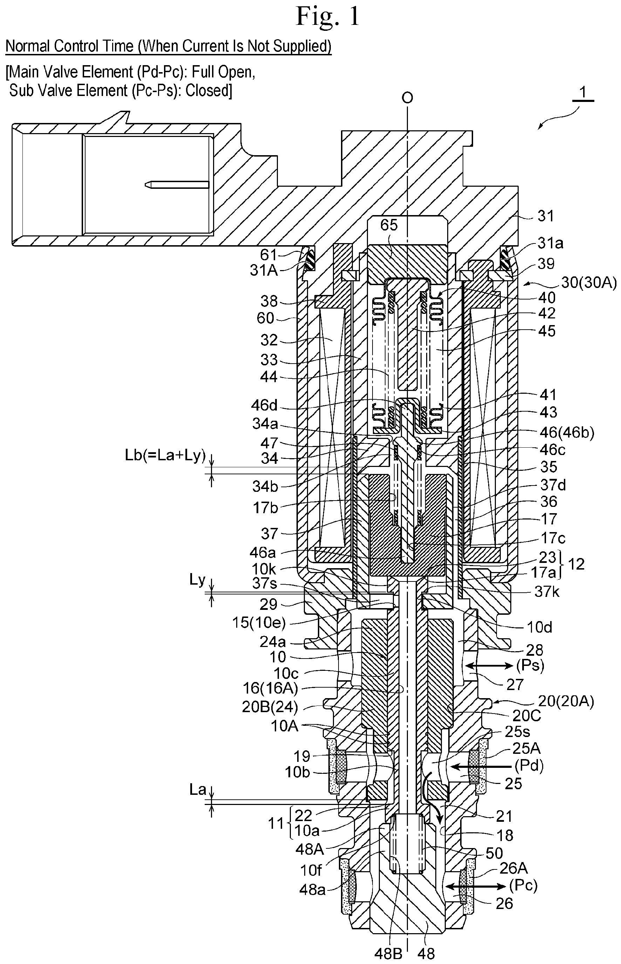

Fig. 1 is a longitudinal sectional view of one embodiment of the variable-capacity compressor control valve according to the present invention in which a main valve element is in the fully open position and a sub valve element is in the closed position (i.e., during the normal control time (i.e., when current is not supplied)).

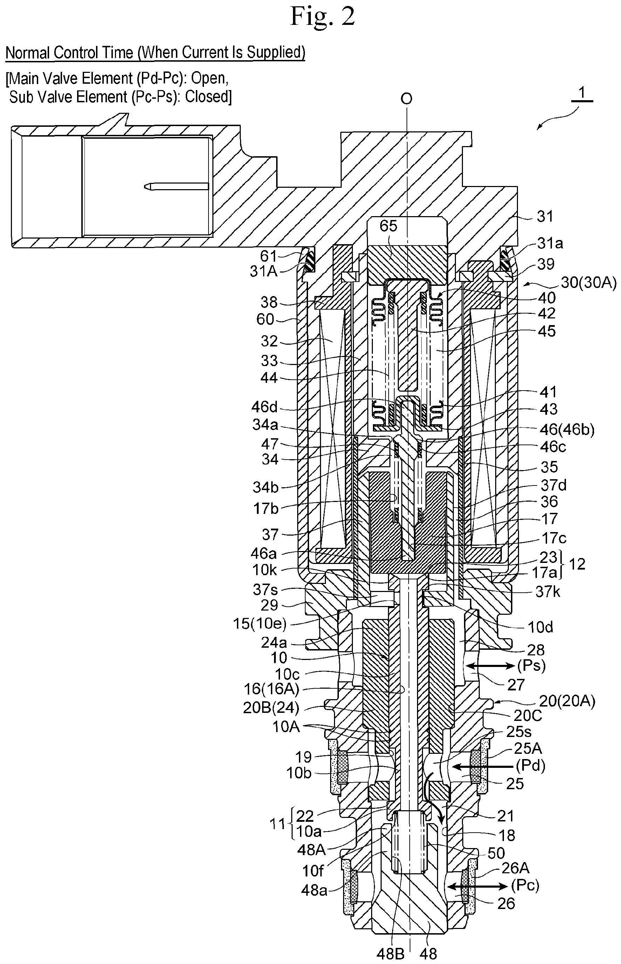

Fig. 2 is a longitudinal sectional view of one embodiment of the variable-capacity compressor control valve according to the present invention in which the main valve element is in the open position and the sub valve element is in the closed position (i.e., during the normal control time (i.e., when current is supplied)).

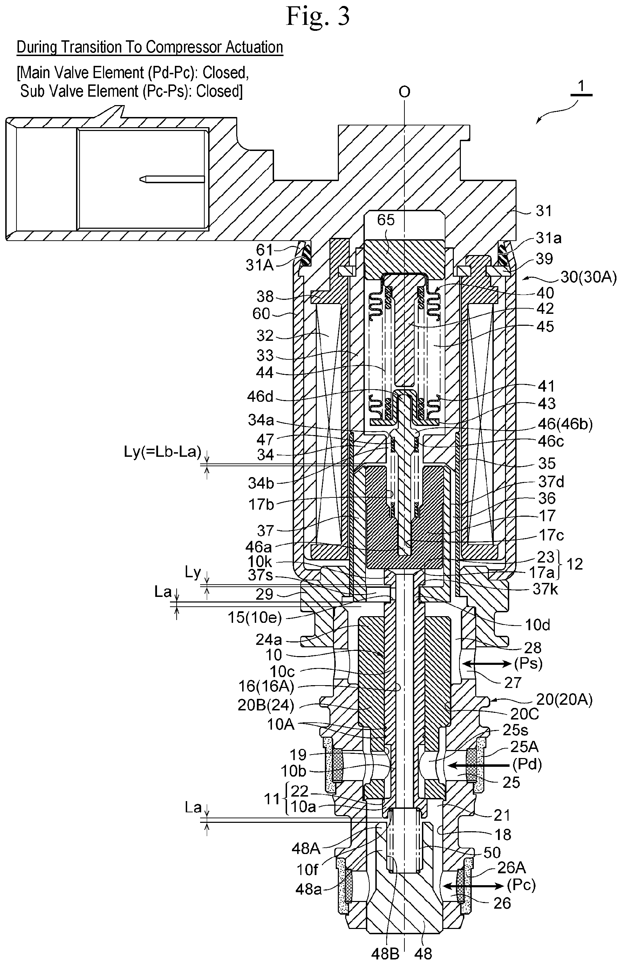

Fig. 3 is a longitudinal sectional view of one embodiment of the variable-capacity compressor control valve according to the present invention in which the main valve element is in the closed position and the sub valve element is in the closed position (i.e., during the time of transition to compressor actuation).

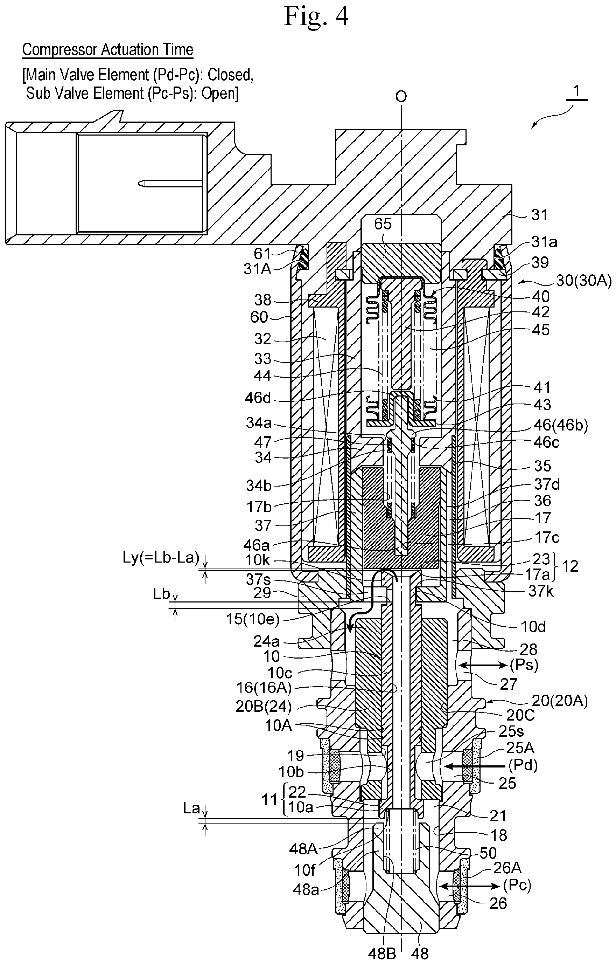

Fig. 4 is a longitudinal sectional view of one embodiment of the variable-capacity compressor control valve according to the present invention in which the main valve element is in the closed position and the sub valve element is in the open position (i.e., during the compressor actuation time).

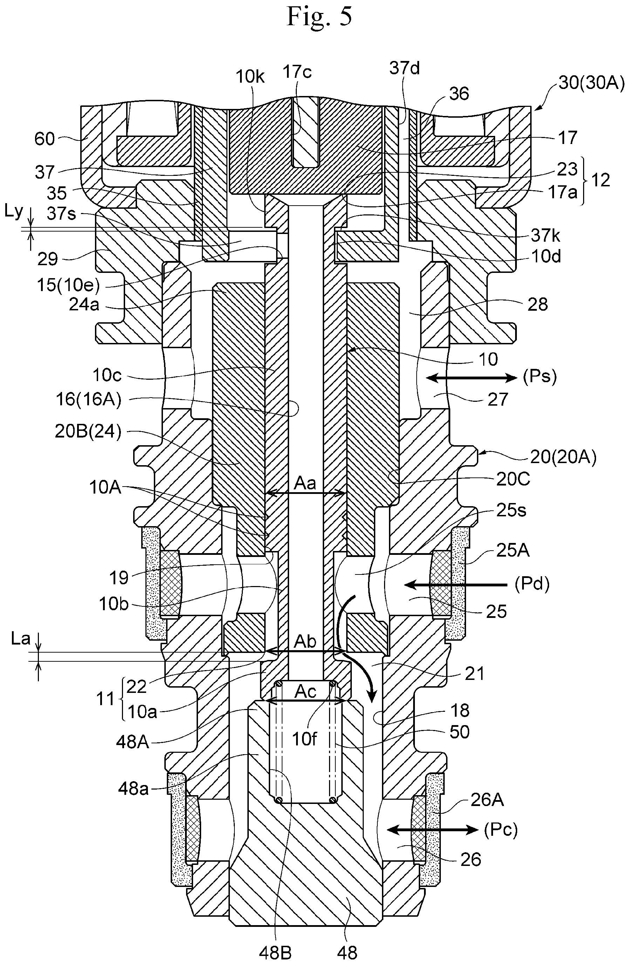

Fig. 5 is an enlarged longitudinal sectional view of the main part of Fig. 1.

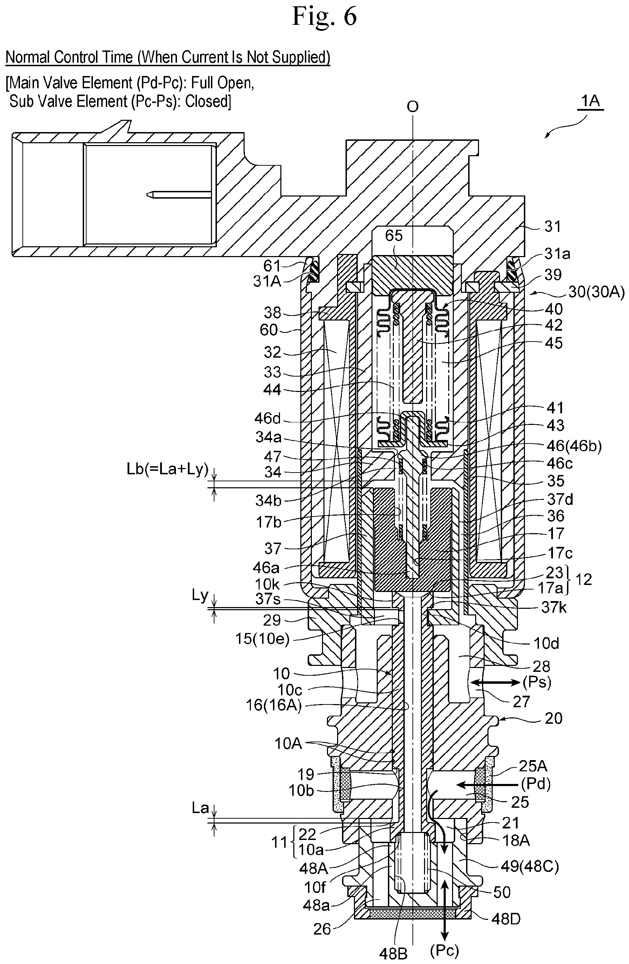

Fig. 6 is a longitudinal sectional view of another example of the variable-capacity compressor control valve according to the present invention in which the main valve element is in the fully open position and the sub valve element is in the closed position (i.e., during the normal control time (i.e., when current is not supplied)).

### Description of Embodiments

Hereinafter, an embodiment of the present invention will be described with reference to the drawings.

Fig. 1 to Fig. 4 are longitudinal sectional views of one embodiment of the variable-capacity compressor control valve according to the present invention. Fig. 1 shows a state in which the main valve element is in the fully open position and the sub valve element is in the closed position (i.e., during the normal control time (i.e., when current is not supplied)). Fig. 2 shows a state in which the main valve element is in the open position and the sub valve element is in the closed position (i.e., during the normal control time (i.e., when current is supplied)). Fig. 3 shows a state in which the main valve element is in the closed position and the sub valve element is in the closed position (i.e., during the time of transition to compressor actuation). Fig. 4 shows a state in which the main valve element is in the closed position and the sub valve element is in the open position (i.e., during the compressor actuation time). It should be noted that Fig. 2 shows a state during the control time with current supplied (compared to Fig. 1) in which when an electromagnetic actuator 30 is supplied with current and energized (current is supplied), the valve opening degree of a valve orifice 22 is adjusted (i.e., the valve opening degree: small) (from the previous state in which the valve orifice 22 is fully open).

It should be noted that in the present specification, descriptions indicating the positions or directions, such as upper, lower, top, bottom, left, right, front, and rear, are used for the sake of convenience in accordance with the drawings to avoid complexity in the description, but such descriptions do not necessarily indicate the actual positions or directions when the control valve of the present invention is incorporated into a compressor.

In addition, in each drawing, a gap formed between some members, a clearance between some members, and the like may be depicted larger or smaller than their actual dimensions to help understand the invention and also for the sake of convenience to create the drawing.

### [Configuration of control valve 1]

A control valve 1 of the embodiment illustrated in the drawings basically includes a valve body 20 with a valve orifice 22, a main valve element 10 for opening or closing the valve orifice 22, an electromagnetic actuator 30 for moving the main valve element 10 in the direction to open or close the valve orifice (i.e., in the vertical direction), and a bellows device 40 serving as a pressure-sensitive reaction member.

The electromagnetic actuator 30 includes a bobbin 38, an energization coil 32 wound around the bobbin 38, a stator 33 and an attractor 34 arranged on the inner periphery side of the coil 32, a guide pipe 35 with its upper end joined by welding to the outer periphery of the lower end (i.e., a step portion) of the stator 33 and the attractor 34, a closed-bottomed cylindrical plunger 37 arranged such that it is vertically slidable on the inner periphery side of the guide pipe 35 below the attractor 34, a cylindrical housing 60 with a bottom hole externally arranged around the coil 32, a connector portion 31 attached to the upper side of the housing 60 with interposed therebetween an attachment plate 39, and a holder 29 disposed between the lower end (i.e., a bottom hole) of the housing 60 and the lower end of the guide pipe 35 and adapted to fix them to the upper portion of the valve body 20 (or a body member 20A thereof). In this example, the cylindrical attractor 34 with an insertion through-hole 34a formed in the center (along the axis O) thereof, which has a smaller diameter than the inside diameter of the stator 33, is integrally molded with the inner periphery of the lower portion of the cylindrical stator 33. The upper end (i.e., a thin portion) of the housing 60 is fixed by swaging (i.e., a swaging portion 61) to an annular groove 31a that is provided on the outer periphery of the connector portion 31 with an O ring 31A interposed as a sealing member. Herein, a portion of the electromagnetic actuator 30 including the coil 32, the stator 33, the attractor 34, and the like and excluding the plunger 37 is referred to as a "solenoid portion 30A."

A short columnar stator 65 is securely attached to the upper portion of the stator 33 by press fitting, for example, and a pressure-sensitive chamber 45, which is adapted to receive a suction pressure Ps in a compressor, is formed between the stator 65 and the attractor 34 on the inner periphery side of the stator 33. The pressure-sensitive chamber 45 has arranged therein the bellows device 40 as the pressure-sensitive reaction member that includes bellows 41, a downwardly projecting upper stopper 42, a downwardly recessed lower stopper 43, and a compression coil spring 44. Further, a stepped, bar-like pushrod 46, which is a thrust transmitting member, is disposed along the axis O below the bellows device 40. An upper portion around the center of the pushrod 46 has a large diameter (i.e., a large-diameter portion 46b). An upper end 46d of the pushrod 46 is fitted and inserted into the recess portion of the lower stopper 43 and thus is supported therein, while the large-diameter portion 46b of the pushrod 46 is inserted through the insertion through-hole 34a of the attractor 34 (with a small gap 34b therebetween). The lower portion of the pushrod 46 is inserted into a recess hole 17b of a sub valve element 17 with a recessed cross-section described below, and the lower end 46a thereof is fitted into a recessed fit-insertion hole 17c formed in the center of the bottom of the recess hole 17b.

The sub valve element 17 with the recessed cross-section, which has the recess hole 17b with an approximately equal diameter to that of the insertion through-hole 34a of the attractor 34, is securely inserted into the plunger 37 by press fitting, for example, such that the sub valve element 17 and the plunger 37 vertically move at the same time. The sub valve element 17 is fitted into the plunger 37 such that the upper end of the sub valve element 17 is aligned with the upper end of the plunger 37 (i.e., the upper end of the sub valve element 17 is positioned with respect to the inner periphery of the upper end of the plunger 37), while the lower end of the sub valve element 17 is spaced apart from the bottom of the plunger 37 (with a gap that allows a flanged latch portion 10k of the main valve element 10 to slightly move vertically, which will be described in detail later). The recessed fit-insertion hole 17c, which is adapted to have the lower end 46a of the pushrod 46 fitted and inserted therein, is formed in the center of the bottom of the recess hole 17b of the sub valve element 17.

A plunger spring (i.e., a valve-opening spring) 47, which is a cylindrical compression coil spring, is provided in a compressed state between a step portion (i.e., an annular terrace face facing downward) 46c formed on the upper portion of the large-diameter portion 46b of the pushrod 46 and the bottom of the recess hole 17b (i.e., a face thereof facing upward around the fit-insertion hole 17c) of the sub valve element 17 fitted in the plunger 37. With the plunger spring 47 (or the compression force thereof), the plunger 37 is urged downward (i.e., in the direction to open the valve) via the sub valve element 17, and the bellows device 40 is held within the pressure-sensitive chamber 45 via the pushrod 46. With the plunger spring 47 (or the compression force thereof), the sub valve element 17 is urged in the direction to close an in-valve release passage 16 (i.e., a release through-hole 16A) (described later). The lower end (i.e., a planar face) of the sub valve element 17 serves as a sub valve element portion 17a that opens and closes the in-valve release passage 16 (which will be described in detail later).

The plunger 37 has formed at its bottom a slit 37s with a through hole that extends linearly from the outer periphery thereof to the center (on the axis O) and passes therethrough the flanged latch portion 10k of the main valve element 10. The height (in the vertical direction) of the slit 37s (i.e., the thickness (or the height in the vertical direction) of the bottom of the plunger 37) is set slightly smaller than the height of an upper small-diameter portion 10d of the main valve element 10 so that the main valve element 10 is vertically movable with respect to the plunger 37 (this will be described in detail later). In addition, the width (in the horizontal direction) of the slit 37s is set slightly larger than the outside diameter of the upper small-diameter portion 10d of the main valve element 10 and smaller than the outside diameter of the flanged latch portion 10k of the main valve element 10, taking into consideration the assembly property and the like. The outer periphery portion of the slit 37s at the upper face of the bottom of the plunger 37 serves as an inner flanged latch portion 37k to which the flanged latch portion 10k of the main valve element 10 is adapted to be latched.

In this example, a communication groove 37d including a D-cut surface or one or more of vertical grooves, for example, is formed in a predetermined position (i.e., opposite to the slit 37s in the example illustrated in the drawing) on the outer periphery of the plunger 37. The communication groove 37d serves to form a gap 36 between the outer periphery of the plunger 37 and the inner periphery of the guide pipe 35.

The main valve element 10 disposed below the plunger 37 and the sub valve element 17 is made of non-magnetic metal, for example, and is formed of a stepped shaft-shaped member disposed along the axis O. The main valve element 10 includes, from the lower side, a main valve element portion 10a with a relatively large diameter, a lower small-diameter portion 10b, an intermediate fit-inserted portion 10c that is vertically long, the upper small-diameter portion 10d, and the flanged latch portion 10k. An annular groove 10A is provided in each of two vertical positions on the outer periphery of the lower portion of the intermediate fit-inserted portion 10c.

As described above, the upper small-diameter portion 10d of the main valve element 10 is loosely fitted in the slit 37s, and the flanged latch portion 10k is loosely fitted on the inner side of the plunger 37 below the sub valve element 17 (i.e., in a space between the bottom of the plunger 37 and the lower end of the sub valve element 17). The flanged latch portion 10k has a larger diameter than the width of the slit 37s so that when the plunger 37 is moved upward with respect to the main valve element 10, the inner flanged latch portion 37k made of the outer periphery portion of the slit 37s is latched to the flanged latch portion 10k, and thus, latching is achieved and slippage is prevented. In addition, the intermediate fit-inserted portion 10c has a diameter that is slightly larger than the width of the slit 37s and smaller than the outside diameter of the plunger 37.

In this example, the release through-hole 16A, which partially forms the in-valve release passage 16 (which will be described later), is provided in the center of the main valve element 10 in a manner penetrating therethrough in the vertical direction (i.e., along the axis O), and a communication hole 10e, which is a horizontal hole partially forming a pressure equalizing passage 15 (which will described later) together with the release through-hole 16A, is formed in the upper small-diameter portion 10d.

Meanwhile, the valve body 20 has a two-component configuration including a stepped cylindrical body member 20A having a fit recess hole 20C in the center of the upper portion thereof and also having a housing hole 18, which is continuous with the recess hole 20C and has a slightly smaller diameter than that of the recess hole 20C, in the center of the lower portion thereof; and a cylindrical seat member 20B that is securely inserted into the recess hole 20C by press fitting, for example.

The seat member 20B is produced from stainless steel (SUS) or a high-hardness brass material, for example, and is provided with an extending portion 24a, which extends to the lower side of the plunger 37, in a protruding manner on the upper part of a stepped fit-insertion portion 24 which is adapted to be fitted and inserted into the recess hole 20C (i.e., so as to protrude from the fit-insertion portion 24 toward a Ps inlet/outlet chamber 28). The seat member 20B (or the extending portion 24a thereof) (or the outside diameter thereof) has a slightly smaller diameter than that of the plunger 37 in this example. The lower end of the seat member 20B (or the fit-insertion portion 24 thereof) is made to abut a step portion (i.e., a terrace portion) between the recess hole 20C and the housing hole 18 of the body member 20A. Further, a guide hole 19, through which the intermediate fit-inserted portion 10c of the main valve element 10 is slidably fitted and inserted, is provided in the center of the seat member 20B in a manner penetrating therethrough in the vertical direction (i.e., along the axis O). The lower end of the guide hole 19 serves as the valve orifice (i.e., a valve seat portion) 22 that is opened or closed by the main valve element portion 10a of the main valve element 10 (from the lower side). Herein, the main valve element portion 10a and the valve orifice 22 form a main valve unit 11.

The body member 20A is produced from a material, such as aluminum, brass, or resin, for example. In a state in which the seat member 20B (or the fit-insertion portion 24 thereof) is inserted into the recess hole 20C of the body member 20A, the Ps inlet/outlet chamber 28 for the suction pressure Ps in the compressor is formed on the outer periphery of the extending portion 24a (i.e., within the body member 20A on the upper end side of the seat member 20B), and a plurality of Ps inlet/outlet ports 27 are formed on the outer periphery side of the Ps inlet/outlet chamber 28. The suction pressure Ps introduced into the Ps inlet/outlet chamber 28 through the Ps inlet/outlet ports 27 is introduced into the pressure-sensitive chamber 45 via the gap 36 formed between the outer periphery of the plunger 37 and the inner periphery of the guide pipe 35, a gap 34b formed between the outer periphery of the pushrod 46 and the attractor 34, and the like.

In addition, the housing hole 18, which has a larger diameter than those of the guide hole 19 and the main valve element portion 10a of the main valve element 10, for housing the main valve element portion 10a is provided continuously with the center of the bottom of the recess hole 20C of the body member 20A. To the lower end of the housing hole 18, a stepped columnar lid-like member 48 is hermetically and securely attached by press fitting, for example, and the upper portion of the lid-like member 48 is provided with, in a protruding manner, a cylindrical portion 48a for forming a Ps introduction chamber 48B, which is a cylindrical space adapted to receive the suction pressure Ps via the pressure equalizing passage 15 (described later). Herein, the upper end (i.e., an annular planar face) of the cylindrical portion 48a is adapted to be in contact with or away from the outer periphery portion of the lower end face of the main valve element portion 10a of the main valve element 10 and serves as a stopper portion 48A for defining the lowest position of the main valve element 10 (i.e., the plunger 37). A valve-closing spring (i.e., an urging member) 50, which is a cylindrical compression coil spring, is provided in a compressed state between the upper portion of the lid-like member 48 (or the inner portion of the cylindrical portion 48a thereof) and a recessed spring receiving hole 10f (or a ceiling face thereof) provided in the lower portion of the main valve element portion 10a of the main valve element 10 (that is, inside of the Ps introduction chamber 48B). Thus, with the urging force of the valve-closing spring 50, the main valve element 10 is urged (upward) in the valve-closing direction, and the main valve element 10 (or the upper end of the flanged latch portion 10k thereof) is pressed against the sub valve element 17 (or the lower face thereof). Herein, the inside of the housing hole 18 (i.e., the portion of the seat member 20B below the valve orifice 22 and the outer periphery of the lid-like member 48) is a valve chamber 21.

A plurality of Pd introduction ports 25 communicating with the discharge chamber of the compressor are provided in the recess hole 20C, and a ring-like filter member 25A is disposed around the outer periphery of the Pd introduction ports 25. In addition, a plurality of horizontal holes 25s communicating with the Pd introduction ports 25 and continuous with the guide hole 19 are provided in the fit-insertion portion 24 of the seat member 20B (in particular, at positions below the portion in which the intermediate fit-inserted portion 10c of the main valve element 10 is inserted) that is inserted into the recess hole 20C.

In addition, a plurality of Pc inlet/outlet ports 26 communicating with the crank chamber of the compressor are provided on the lower outer periphery portion of the housing hole 18 (i.e., the valve chamber 21) (i.e., within the body member 20A on the lower end side of the seat member 20B and downstream of the valve orifice 22), and a ring-like filter member 26A is disposed around the outer periphery of the Pc inlet/outlet ports 26. The Pc inlet/outlet ports 26 are adapted to communicate with the Pd introduction ports 25 via the valve chamber 21 (i.e., the outer periphery of the lid-like member 48) → the gap between the valve orifice 22 and the main valve element portion 10a → the gap between the lower portion of the guide hole 19 and the lower small-diameter portion 10b → the horizontal holes 25s of the fit-insertion portion 24.

In addition, in the present embodiment, the release through-hole 16A that allows the Pc inlet/outlet ports 26 and the Ps inlet/outlet chamber 28 (or Ps inlet/outlet ports 27) to communicate with each other is provided in the center of the inside of the main valve element 10 in a manner penetrating therethrough in the vertical direction (i.e., the direction of the axis O).

The release through-hole 16A partially forms the in-valve release passage 16, and the upper end of the release through-hole 16A (or the upper end of the main valve element 10) serves as a sub valve seat portion 23 with/from which the lower end (or the sub valve element portion) 17a of the sub valve element 17 is adapted to be moved into contact or away.

The sub valve element 17 is securely inserted in the plunger 37 above the main valve element 10 as described above. The outside diameter of the sub valve element 17 (= the inside diameter of the plunger 37) is set larger than the outside diameter of the flanged latch portion 10k of the main valve element 10, and the lower end (i.e., a planar face) of the sub valve element 17 serves as the sub valve element portion 17a that is adapted to move into contact with or away from the sub valve seat portion (i.e., an inverted truncated cone portion) 23, which is the upper end edge of the release through-hole 16A, and thus open or close the in-valve release passage 16 (i.e., the release through-hole 16A). Herein, the sub valve seat portion 23 and the sub valve element portion 17a form a sub valve unit 12.

As described above, in the present embodiment, the Pc inlet/outlet ports 26, the valve chamber 21, the release through-hole 16A formed in the main valve element 10, the inside of the plunger 37, the Ps inlet/outlet chamber 28, and the like form the in-valve release passage 16 for releasing the pressure Pc in the crank chamber to the suction chamber of the compressor via the Ps inlet/outlet ports 27. The in-valve release passage 16 is adapted to be opened or closed as the sub valve element portion (or the lower end) 17a of the sub valve element 17 is moved into contact with or away from the sub valve seat portion (or the inverted truncated cone portion) 23 that is the upper end edge of the release through-hole 16A.

Furthermore, in the present embodiment, in addition to the aforementioned configuration, when the electromagnetic actuator 30 (or the solenoid portion 30A thereof) is not supplied with current (that is, when the main valve element 10 coupled to the plunger 37 abuts the stopper portion 48A in the lowest position and the valve orifice 22 becomes fully open), the following measures are to be taken to bring into balance (i.e., to set off a pressure difference between) the force in the valve-opening direction (downward force) and the force in the valve-closing direction (upward force) due to the refrigerant pressure acting on the main valve element 10.

That is, in the present embodiment, the upper small-diameter portion 10d of the main valve element 10 (on the side where the slit 37s extends) is provided with the communication hole 10e, which is a horizontal hole, for allowing the release through-hole 16A formed inside of the main valve element 10 to communicate with the inside of the plunger 37 (i.e., the slit 37s portion) formed outside of the main valve element 10. The inside of the plunger 37 (i.e., the slit 37s), the communication hole 10e and the release through-hole 16A provided in the main valve element 10, and the like form the pressure equalizing passage 15, which allows the Ps inlet/outlet chamber 28 (or the Ps inlet/outlet ports 27) or the pressure-sensitive chamber 45 provided at the upper end side of the main valve element 10 to communicate with the Ps introduction chamber 48B provided at the lower end side of the main valve element 10 to guide the suction pressure Ps to the Ps introduction chamber 48B.

In the control valve 1 of the present embodiment with such a pressure equalizing passage 15, when the electromagnetic actuator 30 (or the solenoid portion 30A thereof) is not supplied with current (i.e., when the valve orifice 22 is fully open), the main valve element 10 (i.e., the outer periphery portion of the lower end face of the main valve element portion 10a of the main valve element 10) abuts the stopper portion (i.e., the upper end) 48A of the cylindrical portion 48a of the lid-like member 48 thereby to cause the Ps introduction chamber 48B to be separated from the valve chamber 21, and the introduction of the pressure Pc in the crank chamber from the Pc inlet/outlet ports 26 into the Ps introduction chamber 48B is stopped (blocked) and the suction pressure Ps is introduced into the Ps introduction chamber 48B through the pressure equalizing passage 15. Thus, the suction pressure Ps acts on the upper and lower ends of the main valve element 10 (see Fig. 1).

Meanwhile, when the electromagnetic actuator 30 (or the solenoid portion 30A thereof) is supplied with current (i.e., when the valve opening degree of the valve orifice 22 is controlled or when the valve orifice 22 is closed), the main valve element 10 (i.e., the outer periphery portion of the lower end face of the main valve element portion 10a of the main valve element 10) becomes separated from the stopper portion (i.e., the upper end) 48A of the cylindrical portion 48a of the lid-like member 48 thereby to communicate the Ps introduction chamber 48B and the valve chamber 21 with each other, and the pressure Pc in the crank chamber is introduced into the Ps introduction chamber 48B via the Pc inlet/outlet ports 26. Thus, the pressure Pc in the crank chamber acts on the lower end of the main valve element 10 (that is, the pressure acting on the lower end of the main valve element 10 is switched from the suction pressure Ps to the pressure Pc in the crank chamber), the suction pressure Ps acts on the upper end of the main valve element 10, and the main valve element 10 is urged (upward) in the valve-closing direction in response to the pressure difference (Pc-Ps) between the upper and lower ends of the main valve element 10 (see Fig. 2 to Fig. 4).

Further, in the control valve 1 of this example, the outside diameter (i.e., the cross-sectional area Aa) of the intermediate fit-inserted portion 10c of the main valve element 10 (i.e., the diameter (i.e., the opening area or the pressure receiving area) of the guide hole 19), the diameter (i.e., the pressure receiving area or the effective opening area Ab) of the valve orifice 22, and the outside diameter (i.e., the cross-sectional area Ac) (that is, the pressure receiving area of the Ps introduction chamber 48B) of the portion of the main valve element 10 abutting the stopper portion 48A of the cylindrical portion 48a of the lid-like member 48 are approximately equal to one another (see Fig. 5).

In the control valve 1 with the aforementioned configuration, when the aforementioned electromagnetic actuator 30 (or the solenoid portion 30A thereof) is not supplied with current, the force in the valve-opening direction (downward force) and the force in the valve-closing direction (upward force) due to the refrigerant pressure acting on the main valve element 10 are expressed by the following equations (see Fig. 5):

The force applied in the valve-opening direction = Ps×Ac+Pc×Ab+Pd×Aa
The force applied in the valve-closing direction = Ps×Aa+Pd×Ab+Pc×Ac
In this example, as described above, the cross-sectional area Aa of the intermediate fit-inserted portion 10c of the main valve element 10, the effective opening area Ab of the valve orifice 22, and the cross-sectional area Ac of the portion of the main valve element 10 abutting the stopper portion 48A of the cylindrical portion 48a of the lid-like member 48 are approximately equal to one another (Aa=Ab=Ac). Therefore, the force applied in the valve-opening direction and the force applied in the valve-closing direction may be substantially brought into balance (cancel out each other).

It should be noted that in the aforementioned embodiment, although the in-valve-body communication passage 16 (or the release through-hole 16A thereof) for releasing the pressure Pc in the crank chamber to the suction chamber of the compressor via the Ps inlet/outlet ports 27 partially serves as a portion of the pressure equalizing passage 15 (that is, the in-valve release passage 16 is used also as the pressure equalizing passage 15), it is needless to mention that the in-valve release passage 16 and the pressure equalizing passage 15 may be formed as separate components.

In addition, in the aforementioned embodiment, although the in-valve release passage 16 is adapted to include the release through-hole 16A, which is linearly formed in the main valve element 10 in the vertical direction, it is needless to specifically explain that the in-valve release passage 16 may be provided on the valve body 20 side (not in the main valve element 10), for example. It is also needless to mention that the in-valve release passage 16 may be omitted.

It is also needless to mention that the method of forming the in-valve release passage 16 (the release through-hole 16A) and the pressure equalizing passage 15, the shape, the arrangement, and the like thereof are not limited to those illustrated in the example.

In the aforementioned embodiment, although the valve body 20 has a two-component configuration including the body member 20A and the seat member 20B, it is needless to mention that the valve body 20 may be formed as a unitary component, for example.

In this example, in the control valve 1 of the present embodiment, when the plunger 37, the main valve element 10, and the sub valve element 17 are at the lowest position (when the bottom end face of the main valve element 10 abuts the stopper portion 48A, the main valve unit 11 is in the fully open position, and the sub valve unit 12 is in the fully closed position) as illustrated in Fig. 1, the clearance in the vertical direction between the main valve element portion 10a of the main valve element 10 and the valve orifice (i.e., the valve seat portion) 22 is represented by a first lift amount La, and the clearance between the inner flanged latch portion 37k of the plunger 37 and the flanged latch portion 10k of the main valve element 10 is represented by a predetermined amount Ly. The maximum lift amount (i.e., second lift amount) Lb of the plunger 37 (i.e., the lift amount of from the lowest position to the highest position of the plunger 37) corresponds to the first lift amount La + the predetermined amount Ly.

### [Operation of control valve 1]

Next, the operation of the control valve 1 with the aforementioned configuration will be briefly described.

As described above, in the control valve 1 of this example, when the electromagnetic actuator 30 (or the solenoid portion 30A thereof) is not supplied with current, the force in the valve-opening direction (downward force) and the force in the valve-closing direction (upward force) (that is, the force acting on the main valve element 10 in the moving direction thereof (i.e., in the direction of the axis O)) due to the refrigerant pressure acting on the main valve element 10 are brought into balance (i.e., the pressure difference therebetween is set off) through the pressure equalizing passage 15, whereas when the electromagnetic actuator 30 (or the solenoid portion 30A thereof) is supplied with current, the main valve element 10 (or the outer periphery portion of the lower end face of the main valve element portion 10a of the main valve element 10) becomes separated from the stopper portion 48A of the cylindrical portion 48a of the lid-like member 48, and the main valve element 10 is urged (upward) in the valve-closing direction in response to the pressure difference (Pc-Ps) between the upper and lower ends of the main valve element 10.

During the normal control time (Pd → Pc control time), the lift amount of the plunger 37 (and the sub valve element 17) is slightly greater than the first lift amount La at the maximum, and during the compressor actuation time (Pc → Ps control time), the lift amount of the plunger 37 (and the sub valve element 17) is the second lift amount Lb.

That is, during the normal control time (Pd → Pc control time), when the solenoid portion 30A including the coil 32, the stator 33, the attractor 34, and the like becomes supplied with current and energized from the previous state in which current is not supplied (see Fig. 1), the plunger 37 and the sub valve element 17 are attracted (upwardly) by the attractor 34, and along with the movement of the plunger 37 and the sub valve element 17, the main valve element 10 is moved upward (in the direction to close the valve) with the urging force of the valve-closing spring 50. Meanwhile, the suction pressure Ps introduced into the Ps inlet/outlet ports 27 from the compressor is introduced into the pressure-sensitive chamber 45 through the Ps inlet/outlet chamber 28 via the gap 36 between the outer periphery of the plunger 37 and the inner periphery of the guide pipe 35 and the like, and the bellows device 40 (the inside thereof is at a vacuum pressure) is expansively or contractively displaced in accordance with the pressure (i.e., suction pressure Ps) in the pressure-sensitive chamber 45 (contracts if the suction pressure Ps is high and expands if it is low), and the displacement is then transmitted to the main valve element 10 via the pushrod 46, the sub valve element 17, and the like, whereby the valve opening degree (i.e., clearance between the valve orifice 22 and the main valve element portion 10a) is regulated, and the pressure Pc in the crank chamber is controlled in accordance with the valve opening degree.

In this case, the main valve element 10 is always urged upward with the urging force of the valve-closing spring 50, and the sub valve element 17 is always urged downward with the urging force of a valve-opening spring 47. Therefore, the sub valve element portion 17a is in a state of being pressed against the sub valve seat portion 23 (i.e., the sub valve unit 12 is closed), and the in-valve release passage 16 is blocked within the main valve element 10. Therefore, the pressure Pc in the crank chamber will not be released to the suction chamber via the in-valve release passage 16 (see Fig. 1 and Fig. 2).

In contrast, during the compressor actuation time, the solenoid portion 30A is supplied with current and energized, and the plunger 37 and the sub valve element 17 are attracted (upwardly) by the attractor 34, and along with the upward movement of the plunger 37 and the sub valve element 17, the main valve element 10 is moved upward and the valve orifice 22 is closed by the main valve element portion 10a of the main valve element 10. After that, the plunger 37 and the sub valve element 17 are further moved upward, whereby the sub valve element 17 is caused to open the in-valve release passage 16. Thus, the pressure Pc in the crank chamber is released into the suction chamber via the in-valve release passage 16.

Specifically, until the upward movement amount of the plunger 37 (and the sub valve element 17) reaches the first lift amount La, the main valve element 10 moves in the direction to close the valve such that it follows the upward movement of the plunger 37 and the sub valve element 17 with the urging force of the valve-closing spring 50. Then, when the upward movement amount has reached the first lift amount La, the valve orifice 22 is closed by the main valve element portion 10a of the main valve element 10 (the state illustrated in Fig. 3), and, with the main valve unit 11 in the closed-valve state, the plunger 37 and the sub valve element 17 are further moved upward by the predetermined amount Ly (the state illustrated in Fig. 4). In other words, after the upward movement amount of the plunger 37 and the sub valve element 17 reaches the first lift amount La, the sub valve element 17 together with the plunger 37 is attracted by the attractor 34 until the inner flanged latch portion 37k of the plunger 37 is latched to the flanged latch portion 10k of the main valve element 10, that is, by the predetermined amount of Ly (the first lift amount La + the predetermined amount Ly = the second lift amount Lb). In such a case, the main valve element 10 remains still in the closed-valve state, while the sub valve element portion 17a of the sub valve element 17 is lifted from the sub valve seat portion 23 by the predetermined amount Ly, whereby the in-valve release passage 16 is opened. When the inner flanged latch portion 37k of the plunger 37 is latched to the flanged latch portion 10k of the main valve element 10, neither the plunger 37 nor the sub valve element 17 is lifted any further even if the solenoid portion 30A generates attraction.

As described above, in the control valve 1 of the present embodiment, since the pressure Pc in the crank chamber is released into the suction chamber via the in-valve release passage 16 during the compressor actuation time, it is possible to significantly shorten the time required to increase the discharge capacity during the compressor actuation time. In addition, since the in-valve release passage 16 is closed by the sub valve element 17 during the normal control time (i.e., Pd→Pc control time), the operation efficiency of the compressor will not decrease.

In addition, in the control valve 1 of the present embodiment, the pressure equalizing passage 15 is provided which is adapted to guide the suction pressure Ps acting on the upper end of the main valve element 10 to the Ps introduction chamber 48B provided at the lower end of the main valve element 10 so that the suction pressure Ps acts on the lower end of the main valve element. When the electromagnetic actuator 30 (or the solenoid portion 30A thereof) is not supplied with current (i.e., when the valve orifice 22 is fully open), the introduction of the pressure Pc in the crank chamber from the Pc inlet/outlet ports 26 into the Ps introduction chamber 48B is stopped, and the suction pressure Ps is introduced into the Ps introduction chamber 48B via the pressure equalizing passage 15 so that the suction pressure Ps acts on the upper and lower ends of the main valve element 10.

In other words, the pressure acting on the lower end of the main valve element 10 is switched between the suction pressure Ps and the pressure Pc in the crank chamber when the valve orifice 22 is fully open and either when the valve opening degree of the valve orifice 22 is controlled or when the valve orifice 22 is closed. More specifically, when the valve orifice 22 is fully open, the pressure acting on the upper end of the main valve element 10 is equal to the pressure acting on the lower end of the main valve element 10 (i.e., the suction pressure Ps) through the pressure equalizing passage 15. Meanwhile, when the valve opening degree of the valve orifice 22 is controlled or when the valve orifice 22 is closed, the pressure acting on the lower end of the main valve element 10 is switched from the suction pressure Ps to the pressure Pc in the crank chamber, and the main valve element 10 is urged in the valve-closing direction in response to the pressure difference (Pc-Ps) between the upper and lower ends of the main valve element 10.

Therefore, as compared to the conventional control valve in which the force in the valve-opening direction and the force in the valve-closing direction due to the refrigerant pressure acting on the main valve element are always equal to one another, for example, it is possible to efficiently cancel the influence of the refrigerant pressure acting on the main valve element 10.

More specifically, with the pressure equalizing passage 15 having the aforementioned configuration, if the cross-sectional area Aa (i.e., the opening area or the pressure receiving area of the guide hole 19) of the intermediate fit-inserted portion 10c of the main valve element 10, the cross-sectional area Ac (i.e., the pressure receiving area of the Ps introduction chamber 48B) of the portion of the main valve element 10 abutting the stopper portion 48A, and the effective opening area Ab (i.e., the pressure receiving area) of the valve orifice 22 are equal to one another, the force in the valve-opening direction (downward force) and the force in the valve-closing direction (upward force) due to the refrigerant pressure acting on the main valve element 10 may be brought into balance (cancel out each other). Thus, it is certainly less likely that the refrigerant pressure acting on the main valve element 10 adversely affects the control of the valve.

In addition, since the pressure equalizing passage 15 is adapted to include the inner portion of the main valve element (i.e., the release through-hole 16A and the communication hole 10e), as compared to the conventional control valve in which the valve body is provided with the suction pressure passage and the like, for example, it is possible to cancel the influence of the refrigerant pressure acting on the main valve element 10 without increasing the size of the valve body.

It should be noted that in the aforementioned embodiment, although the Pc inlet/outlet ports 26 communicating with the crank chamber of the compressor are provided on the outer periphery portion of the valve body 20 (or the body member 20A thereof), the Pc inlet/outlet ports 26 may be provided on the bottom of the valve body 20 (i.e., a lid-like member 49 hermetically and securely attached thereto) as illustrated in Fig. 6, for example.

In a control valve 1A illustrated in Fig. 6, the body member 20A and the seat member 20B of the aforementioned embodiment are formed as a unitary component, and the lid-like member 49 with the recessed cross-section, which functions as a filter, is hermetically and securely attached by press fitting, for example, to a large-diameter attachment hole 18A (i.e., an opening having a larger diameter than those of the guide hole 19 and the main valve element portion 10a) formed on the bottom of the stepped cylindrical valve body 20 including the guide hole 19, the Ps inlet/outlet ports 27, the Pd introduction ports 25 with the filter member 25A, and the like. The inner side of the lid-like member 49 (downstream of the valve orifice 22) (more specifically, the outer periphery portion of the cylindrical portion 48a on the inner side of the lid-like member 49) serves as the Pc inlet/outlet ports (inlet/outlet chamber) 26 communicating with the crank chamber of the compressor. The Pc inlet/outlet ports (inlet/outlet chamber) 26 are adapted to communicate with the Pd introduction ports 25 via the valve chamber 21 formed in the lower portion of the valve body 20 → the gap between the valve orifice 22 and the main valve element portion 10a → the gap between the lower portion of the guide hole 19 and the lower small-diameter portion 10b.

Herein, the lid-like member 49 includes a cylindrical coupling member 48C with a flanged portion hermetically and securely attached to the large-diameter attachment hole 18A and a filter member 48D securely coupled to the lower end of the coupling member 48C by engagement or press fitting, for example. The cylindrical portion 48a, which is a cylindrical body with a bottom and an open upper face for forming the Ps introduction chamber 48B adapted to receive the suction pressure Ps via the pressure equalizing passage 15, is provided inside of the coupling member 48C (i.e., above the filter member 48D). The valve-closing spring (i.e., the urging member) 50, which is a compression coil spring adapted to urge the main valve element 10 (upward) in the valve-closing direction, is provided in a compressed state between the bottom of the cylindrical portion 48a and the spring receiving hole 10f (or the ceiling face thereof) provided in the lower portion of the main valve element portion 10a of the main valve element 10 (that is, inside of the Ps introduction chamber 48B).

The control valve 1A with the aforementioned configuration illustrated in Fig. 6 can obtain the same operational advantages as those of the control valve 1 of the aforementioned embodiment. In addition, as compared to the control valve in which the Pc inlet/outlet ports 26 are provided on the outer periphery portion of the valve body 20 (or the body member 20A thereof), for example, the size of the valve body 20 may be reduced, and advantageous effects may be obtained such that the configuration of the control valve may be simplified.

### Reference Signs List

- 1: Variable-capacity compressor control valve
- 10: Main valve element
- 10a: Main valve element portion
- 10b: Lower small-diameter portion
- 10c: Intermediate fit-inserted portion
- 10d: Upper small-diameter portion
- 10e: Communication hole
- 10k: Flanged latch portion
- 11: Main valve unit
- 12: Sub valve unit
- 15: Pressure equalizing passage
- 16: In-valve release passage
- 16A: Release through-hole
- 17: Sub valve element
- 17a: Sub valve element portion
- 18: Housing hole
- 19: Guide hole
- 20: Valve body
- 20A: Body member
- 20B: Seat member
- 20C: Recess hole
- 21: Valve chamber
- 22: Valve orifice
- 23: Sub valve seat portion
- 24: Fit-insertion portion
- 25: Pd introduction port
- 26: Pc inlet/outlet port
- 27: Ps inlet/outlet port
- 28: Ps inlet/outlet chamber
- 30: Electromagnetic actuator
- 30A: Solenoid portion
- 32: Coil
- 33: Stator
- 34: Attractor
- 37: Plunger
- 37s: Slit
- 40: Bellows device (pressure-sensitive reaction member)
- 45: Pressure-sensitive chamber
- 46: Pushrod
- 48: Lid-like member
- 48a: Cylindrical portion
- 48A: Stopper portion
- 48B: Ps introduction chamber
- 50: Valve-closing spring (urging member)

## Claims

1. A variable-capacity compressor control valve, comprising:
a main valve element including a main valve element portion;
a valve body including
a valve chamber with a valve orifice, the valve orifice being adapted to be in contact with or away from the main valve element portion,
a Ps inlet/outlet port communicating with a suction chamber of a compressor,
a Pd introduction port arranged upstream of the valve orifice and communicating with a discharge chamber of the compressor, and
a Pc inlet/outlet port arranged downstream of the valve orifice and communicating with a crank chamber of the compressor;
an electromagnetic actuator including a plunger, the electromagnetic actuator being adapted to move the main valve element in a direction to open or close the valve orifice;
a pressure-sensitive chamber adapted to receive a suction pressure Ps from the compressor via the Ps inlet/outlet port; and
a pressure-sensitive reaction member adapted to urge the main valve element in the direction to open or close the valve orifice in accordance with a pressure in the pressure-sensitive chamber,
wherein:
the Ps inlet/outlet port or the pressure-sensitive chamber is provided at one end of the main valve element so that the suction pressure Ps acts on the one end of the main valve element, and the Pc inlet/outlet port is provided at another end of the main valve element so that a pressure Pc in the crank chamber from the compressor acts on the other end of the main valve element,
a pressure equalizing passage is provided, the pressure equalizing passage being adapted to guide the suction pressure Ps to a Ps introduction chamber provided at the other end of the main valve element, so that the suction pressure Ps acts on the other end of the main valve element, and
when the valve orifice is fully open, introduction of the pressure Pc in the crank chamber from the Pc inlet/outlet port into the Ps introduction chamber is stopped, and the suction pressure Ps is introduced into the Ps introduction chamber via the pressure equalizing passage so that the suction pressure Ps acts on the one end and the other end of the main valve element.

2. A variable-capacity compressor control valve, comprising:
a main valve element including a main valve element portion;
a valve body including
a valve chamber with a valve orifice, the valve orifice being adapted to be in contact with or away from the main valve element portion,
a Ps inlet/outlet port communicating with a suction chamber of a compressor,
a Pd introduction port arranged upstream of the valve orifice and communicating with a discharge chamber of the compressor, and
a Pc inlet/outlet port arranged downstream of the valve orifice and communicating with a crank chamber of the compressor;
an electromagnetic actuator including a plunger, the electromagnetic actuator being adapted to move the main valve element in a direction to open or close the valve orifice;
a pressure-sensitive chamber adapted to receive a suction pressure Ps from the compressor via the Ps inlet/outlet port; and
a pressure-sensitive reaction member adapted to urge the main valve element in the direction to open or close the valve orifice in accordance with a pressure in the pressure-sensitive chamber,
wherein:
the Ps inlet/outlet port or the pressure-sensitive chamber is provided at one end of the main valve element so that the suction pressure Ps acts on the one end of the main valve element, the Pc inlet/outlet port is provided at another end of the main valve element, and a pressure equalizing passage is provided, the pressure equalizing passage being adapted to guide the suction pressure Ps to a Ps introduction chamber provided at the other end of the main valve element, so that the suction pressure Ps acts on the other end of the main valve element,
when the valve orifice is fully open, introduction of a pressure Pc in the crank chamber from the Pc inlet/outlet port into the Ps introduction chamber is stopped, and the suction pressure Ps is introduced into the Ps introduction chamber via the pressure equalizing passage so that the suction pressure Ps acts on the one end and the other end of the main valve element, and
when a valve opening degree of the valve orifice is controlled or when the valve orifice is closed, the pressure Pc in the crank chamber is introduced into the Ps introduction chamber via the Pc inlet/outlet port so that the pressure Pc in the crank chamber acts on the other end of the main valve element and the suction pressure Ps acts on the one end of the main valve element.

3. The variable-capacity compressor control valve according to claim 1 or 2, wherein introduction of the pressure Pc in the crank chamber from the Pc inlet/outlet port into the Ps introduction chamber is stopped by the main valve element.

4. The variable-capacity compressor control valve according to claim 3, wherein introduction of the pressure Pc in the crank chamber from the Pc inlet/outlet port into the Ps introduction chamber is stopped when the main valve element abuts a stopper portion for defining a lowest position of the main valve element.

5. The variable-capacity compressor control valve according to claim 4, wherein the stopper portion is provided on an end of a cylindrical portion, the cylindrical portion being provided in the valve body in a protruding manner so as to form the Ps introduction chamber.

6. The variable-capacity compressor control valve according to claim 5, wherein:
the valve body is provided with a guide hole through which an intermediate fit-inserted portion of the main valve element is slidably fitted and inserted, and
a cross-sectional area of the intermediate fit-inserted portion of the main valve element, a cross-sectional area of a portion of the main valve element abutting the stopper portion, and an opening area of the valve orifice are equal to one another so that a force in a valve-opening direction and a force in a valve-closing direction due to a refrigerant pressure acting on the main valve element are equal to one another when the valve orifice is fully open.

7. The variable-capacity compressor control valve according to any one of claims 1 to 6, wherein an urging member adapted to urge the main valve element in the valve-closing direction is mounted in the Ps introduction chamber.

8. The variable-capacity compressor control valve according to any one of claims 1 to 7, wherein the Pc inlet/outlet port is provided on an outer periphery portion or a bottom of the valve body.

9. The variable-capacity compressor control valve according to claim 8, wherein the Pc inlet/outlet port is provided in a lid-like member hermetically and securely attached to the bottom of the valve body.

10. The variable-capacity compressor control valve according to any one of claims 1 to 9, wherein the pressure equalizing passage is adapted to include an inner portion of the main valve element.

11. The variable-capacity compressor control valve according to any one of claims 1 to 10, further comprising:
an in-valve release passage provided in the main valve element or the valve body, the in-valve release passage being adapted to release the pressure Pc in the crank chamber to the suction chamber of the compressor via the Ps inlet/outlet port; and
a sub valve element adapted to open or close the in-valve release passage.

12. The variable-capacity compressor control valve according to claim 11, wherein:
the in-valve release passage adapted to release the pressure Pc in the crank chamber to the suction chamber of the compressor via the Ps inlet/outlet port is provided in the main valve element, and
the in-valve release passage partially serves as a portion of the pressure equalizing passage.

13. The variable-capacity compressor control valve according to claim 12, wherein the sub valve element is securely inserted into the plunger.

14. A variable-capacity compressor control valve, comprising:
a main valve element including a main valve element portion;
a valve body including
a valve chamber with a valve orifice, the valve orifice being adapted to be in contact with or away from the main valve element portion,
a Ps inlet/outlet port communicating with a suction chamber of a compressor,
a Pd introduction port arranged upstream of the valve orifice and communicating with a discharge chamber of the compressor, and
a Pc inlet/outlet port arranged downstream of the valve orifice and communicating with a crank chamber of the compressor;
an electromagnetic actuator including a plunger, the electromagnetic actuator being adapted to move the main valve element in a direction to open or close the valve orifice;
a pressure-sensitive chamber adapted to receive a suction pressure Ps from the compressor via the Ps inlet/outlet port; and
a pressure-sensitive reaction member adapted to urge the main valve element in the direction to open or close the valve orifice in accordance with a pressure in the pressure-sensitive chamber,
wherein:
the Ps inlet/outlet port or the pressure-sensitive chamber is provided at one end of the main valve element so that the suction pressure Ps acts on the one end of the main valve element, and the Pc inlet/outlet port is provided at another end of the main valve element so that a pressure Pc in the crank chamber from the compressor acts on the other end of the main valve element, and
a pressure acting on the one end of the main valve element or a pressure acting on the other end of the main valve element is switched between the suction pressure Ps and the pressure Pc in the crank chamber when the valve orifice is fully open and either when a valve opening degree of the valve orifice is controlled or when the valve orifice is closed.

15. The variable-capacity compressor control valve according to claim 14,
wherein:
when the valve orifice is fully open, a pressure acting on the one end of the main valve element is equal to a pressure acting on the other end of the main valve element, and
when a valve opening degree of the valve orifice is controlled or when the valve orifice is closed, a pressure acting on the one end of the main valve element or a pressure acting on the other end of the main valve element is switched, and the main valve element is adapted to be urged in a valve-closing direction in response to a pressure difference between the one end and the other end of the main valve element.

16. The variable-capacity compressor control valve according to claim 15,
wherein:
when the valve orifice is fully open, introduction of the pressure Pc in the crank chamber from the Pc inlet/outlet port into a Ps introduction chamber provided at the other end of the main valve element is stopped so that the suction pressure Ps acts on the one end and the other end of the main valve element, and
when a valve opening degree of the valve orifice is controlled or when the valve orifice is closed, the pressure Pc in the crank chamber is introduced into the Ps introduction chamber via the Pc inlet/outlet port so that the pressure Pc in the crank chamber acts on the other end of the main valve element and the suction pressure Ps acts on the one end of the main valve element, and the main valve element is adapted to be urged in a valve-closing direction in response to a pressure difference between the one end and the other end of the main valve element.

17. The variable-capacity compressor control valve according to claim 16, wherein a pressure equalizing passage is provided, the pressure equalizing passage being adapted to guide the suction pressure Ps to the Ps introduction chamber so that the suction pressure Ps acts on the other end of the main valve element.
